# EUROPEAN PATENT SPECIFICATION

(11) **EP 0 340 149 B1**
(45) Date of publication and mention of the grant of the patent: **19.05.1993**
(21) Application number: 89630081.1
(22) Date of filing: 20.04.1989
(51) Int. Cl.: F01D 5/08, F01D 5/18, F01D 25/32, F02C 7/30

(54) **Dirt removal means for air cooled blades**
Staubabscheider für eine luftgekühlte Schaufel
Moyens de dépoussiérage pour une aube refroidie par de l'air

(30) Priority: 25.04.1988 US 185226; 25.04.1988 US 185227
(43) Date of publication of application: 02.11.1989
(73) Proprietor: UNITED TECHNOLOGIES CORPORATION, Hartford, CT 06101 (US)
(72) Inventor: Hall, Kenneth B., Jupiter Florida 33478 (US); Auxier, Thomas A., Palm Beach Gardens Florida 33418 (US); Brown, Wesley D., Jupiter Florida 33458 (US)
(74) Representative: Weydert, Robert

(56) References cited:
- EP-A- 0 232 782
- CH-A- 577 108
- FR-A- 2 198 052
- US-A- 2 632 626
- US-A- 2 647 368
- US-A- 3 356 340
- US-A- 3 918 835
- US-A- 4 309 147
- PATENT ABSTRACTS OF JAPAN, vol. 11, no. 10 (M-552)[2457], 10th January 1987;& JP-A-61 187 597 (NIPPON KIKAI GIJUTSU K.K.) 21-08-1986

## Description

This invention relates to cooled blades of a rotor of a gas turbine engine and particularly for controlling foreign matter contained in the cooling air so as to prevent clogging of the cooling air holes or passages in the blade.

It is well known that engine parts, particularly the blades of the turbine of aircraft gas turbine engines are cooled by use of engine cooling air. For example, cooling of the turbine blades is attained by routing cooling air from the engine's compressor through a TOBI (turbine on-board injector) which is then fed through internal passages formed within the blade. The air is ultimately discharged through openings in the turbine blades and may be returned to the engine's gas path. An internally cooled blade according to the pre-characterising portion of the independent claims 1, 3 and 5 is disclosed in EP-A-0232 782.

Equally well known is the fact that foreign matter, either acquired through the ambient environment or self-generated within the engine, ingests into the cooling airstream and has the propensity of clogging these cooling passages and openings referred to in the above. Obviously, aircraft that is operating in areas where dust is at high levels, such as in the sandy areas of certain geographic locations of the world, the problem becomes exasperated.

Many attempts have been made to alleviate these problems and examples of such attempts are disclosed, for example, in US-A-3,356,340, 4, 309,147, 2,632,626 and 3,918,835.

In each of these instances the cooling air passes through a tortuous route before reaching the turbine cooling passages so that the foreign particles in the cooling airstream are diverted from the turning cooling airstream or the cooled air entrained dirt is admitted to a centrifugal field where the heavier foreign particles are centrifuged to a surface and retained there until the engine is disassembled and cleaned. US-A-3,918,835 discloses a centrifugal type of dirt separator and provides an inclined surface that directs the collected dirt particles toward the labyrinth seal where it migrates thereto and is carried through the seal by the leakage air.

In other types of dirt separators or removal schemes, mechanisms upstream of the turbine are provided so as to prevent the dirt from reaching the turbine blades. Historically, such schemes would include a ramp mounted ahead of the TOBI. The ramp serves to deflect and prevents the dirt from making the sharp turn that is required for the cooling air to get into the TOBI. This has met with some success where the dirt particles are sufficiently large so that the inertia of the particle overcomes the velocity of the cooling airstream causing the particle to continue its travel while the air makes a turn. However, smaller sized particles would be influenced by the cooling stream velocity and would turn with the air and hence be carried into the blade cooling passages and holes. This resulted in dirt buildup in passages and clogging of holes which adversely affected the cooling ability of the cooling system. Obviously, this blockage can result in distress or failure of the airfoil or reduce the pressure of the cooling air supplied to the vane upstream of the turbine. To overcome the pressure loss it would be necessary to increase coolant outflow which, in turn, would increase the burner pressure drop and thereby adversely affect engine performance.

The object of the invention is to obviate the problems enumerated in the above by designing the blade itself to carry its own dirt removal system, hence providing a method to make the cooled turbine blades tolerant to dirt or dust contaminating the cooling air.

According to the invention this is achieved by the features recited in the characterizing portion of the independent claims 1,3 or 5.

A feature of one embodiment of the invention is to cast the aircraft turbine engine multipassage blade with internal baffles such that the baffles guide the entrained dirt into a preselected passage internally of the blade where the velocity of the cooling air in that passage carries the entrained dirt to a dirt removal hole formed in the tip of the blade.

In an other embodiment a stamped out sheet metal deflector or baffle is attached to the root of the blade so as to direct the dirt entrained air either into a high velocity passage in the blade itself or a high velocity passage in the turbine disk or in proximity thereto.

The baffle can be stamped out from a sheet metal stock and can be sized to attach the deflector as a "fix" to the underside of existing blades.

The turbine blade of the invention eliminates the need of the upstream air cleansing schemes that have been heretofore prevalent in the gas turbine engine technology.

The foregoing and other features and advantages of the present invention will become more apparent from the following description and accompanying drawings.

Fig. 1 is a view partly in section and schematic illustrating a prior art air cooled turbine blade design.

Fig. 2 is a view similar to Fig. 1 of an air cooled turbine blade according to one embodiment of the present invention.

Fig. 3 is a partial view of a turbine rotor in section and partly in schematic incorporating a turbine blade according to another embodiment of the present invention.

Fig. 4 is a partial view taken along the lines 4-4 of Fig. 3.

Fig. 5 is a bottom view of the blade of Fig. 3 showing the deflectors fabricated from sheet metal stock.

Fig. 6 is a partial view similar to Fig. 3 showing modification of the embodiment of Fig. 3.

Fig. 7 is a view in elevation of the stamped out sheet metal stock forming the deflector of Fig. 6.

For a detailed description of a cooled turbine blade for an aircraft gas turbine engine, reference should be made to US-A-4,479,532.

For the sake of simplicity and convenience the detail of the blades is omitted from the drawings and only the essential portions necessary for an understanding of the invention will be detailed. As will be understood, the internal construction of the blade may utilize any of the heat transfer enhancement schemes that are known in this technology. Hence, it is contemplated that the airfoil would incorporate the requisite trip strips, pedestals, vanes and the like to achieve the desired cooling.

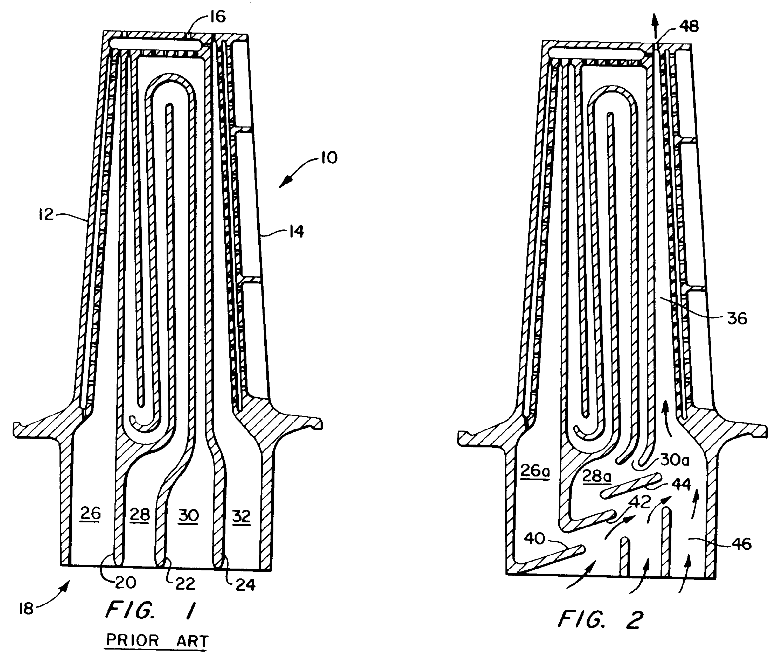

The prior art design is illustrated in Fig. 1 showing the interior of the airfoil section taking a section through the longitudinal or spanwise axis. The airfoil section 10 of the blade is partitioned by a plurality of ribs into a plurality of subpassages. As noted, the blade comprises the leading edge 12, trailing edge 14, tip 16 and root end 18. Ribs 20,22 and 24 define four passages 26, 28, 30 and 32 extending in the spanwise direction, rib 20 is bifurcated defining additional subpassages for defining serpentine passages with rib 30. As is well known each of the passages and the impingement sections are designed to accomplish well defined objectives, which are not dealt with in this patent application. The design of these high technology cooled turbine blades require a significant number of holes which also have well defined objectives.

It is apparent from the foregoing that the cooling air admitted into these passages is entrained with foreign matter, and this foreign matter more likely than not will adhere to the walls of the passages and/or clog the holes.

According to this invention and referring particularly to Fig. 2, which incorporates the high technology heat transfer enhancement techniques (not shown), the ribs are modified in such a manner as to form deflectors for the dirt entrained cooling air so that all or a significant amount of the dirt entrained air is directed to the trailing edge passage 36; the passages being rearranged to provide for the dirt removal.

As noted in Fig. 2, similar components have like reference numerals and where the component is modified a subscript "a" has been added. The angled rib portions 40, 42 and 44 are disposed at the root portion of the blade in proximity to the inlet of passages 26a, 28a and 30a and as noted are inclined from the root to the tip and extend in the chord direction and are cast into the blade. These rib portions 40, 42 and 44 serve to deflect the cooling air entrained with dirt in a direction toward the trailing edge passage 36. Passage 36 is specifically designed as a straight through passage and is directly communicating with the inlet air admitted into the root in passage 46. A dirt removal hole 48 is formed at the tip end of passage 36 to discharge the dirt entrained air into the engine's gas path. The purpose of designing passage 36 with as little, if any, turns is to assure that the velocity of the cooling airstream is sufficient to flow the dirt directly out through the dirt removal hole 48.

The other passages 26a, 28a and 30a are thus substantially free of dirt. In addition to providing for a dirt removal system directly in the blade, by selectively directing the dirt through the passage with the high velocity cooling airstream, it is now possible to eliminate the many purge holes that heretofore have been designed with these blades. This obviates the problem of utilizing a large amount of air that is not being utilized solely for cooling and as experience has shown, the air velocity in some of these passages associated with the purge air holes is relatively low which impedes or limits the removal of dirt.

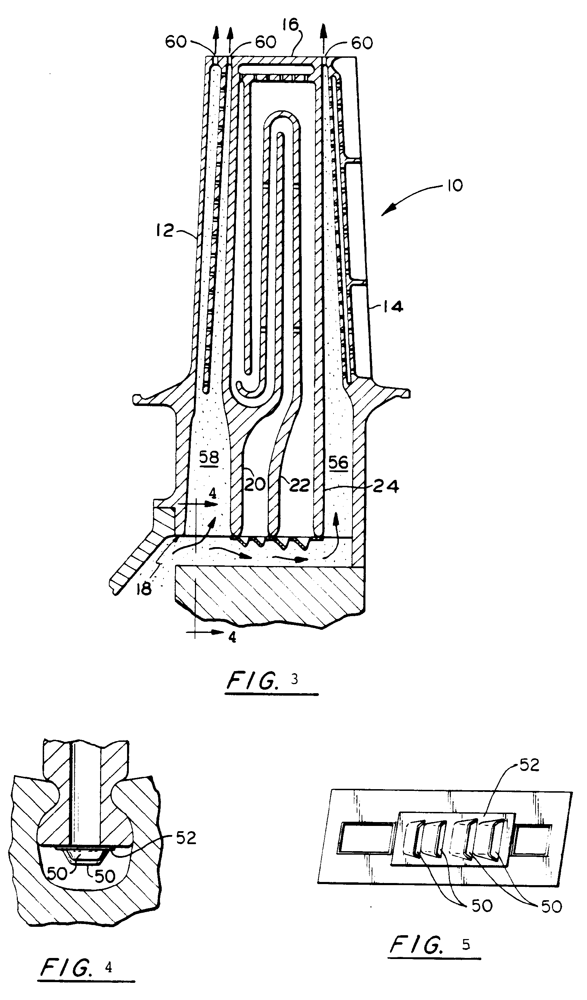

The airfoil section 10 of the blade of Fig. 3 is partitioned by a plurality of ribs 20, 22, 24 into a plurality of subpassages. As noted, the blade comprises the leading edge 12, trailing edge 14, tip 16 and root end 18. Ribs 20, 22 and 24 define multi passages including passage 56 and 58 extending in the spanwise direction.

As can be seen in Figs. 3, 4 and 5 deflecting members 50 are mounted to the root end of the blade and serve to deflect the dirt entrained air to one or more specific passageways.

The deflectors 50 are stamped out of sheet metal blank 52 and then is suitably attached to the root of the blade 10 by any well-known method such as brazing, welding, etc. The deflectors 50 which are defined by raised panels extending from the leading edge to the trailing edge and are positioned to overlie the passages intended to be protected. The dimensions of these panels will be predicated on the size of the opening being protected. In this instance, the deflectors 50 deflect the dirt entrained cooling air into the trailing edge passage 56 and leading edge passage 58 and divert this contaminated air from the serpentine passages. The leading edge passage 58 and trailing edge passage 56 are formed so as to afford as little pressure losses as possible and receive air at sufficient velocity to carry the dirt to the dirt removal holes 60. The dirt free or substantially dirt free air can still get into the serpentine passages through the openings underneath the panels 50.

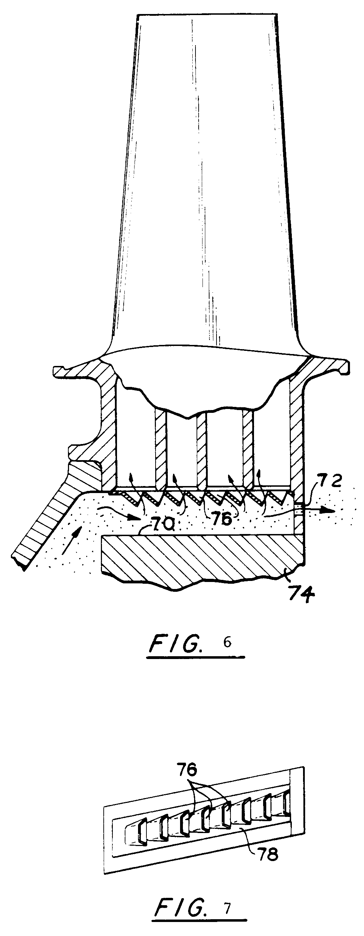

Figs. 6 and 7 illustrate a third embodiment of this invention utilizing a similar fabricated deflector where the dirt entrained air is directed to the high velocity passageway 70 and discharged away from the blade's internal passageways through apertures 72 formed in the blade or in the disk 74 of the turbine rotor. Again, as was the design of Figs. 3 to 5, the deflectors 76 are stamped out of a sheet metal stock 78 which is sized to overlie the passages at the root of the turbine blade. Also, the sheet metal plate 78 can be affixed to the blade in any suitable manner, by say brazing, welding or mechanical attaching means.

It is apparent from the foregoing that the embodiments of Figs. 3 through 7 can be utilized with existing internally cooled blades. Hence, such a design would be efficacious to "fix" an existing blade clogging problem.

## Claims

1. Internally cooled blade for a gas turbine engine, said blade having a root section and tip section, wall means between said root section and tip section defining the airfoil of said blade, a plurality of ribs defining passageways (26a,28a,30a) extending spanwise in said blade for communicating cooling air through said blade discharging into the turbine engine's gas path through apertures formed in said airfoil, characterized by means for preventing dirt from clogging said apertures, said means including at least one straight through passageway (36) and hole (48) formed in said tip section sized for the largest particle of dirt anticipated to be entrained in said cooling air, and at least one rib (40) at the root section having a baffle-like shaped portion angularly disposed relative to said passageways (26a,28a,30a) for directing the dirt entrained air into said straight through passageway (36) and preventing said dirt entrained air from entering said other passageways (26a,28a,30a).

2. Internally cooled blade according to claim 1, characterized in that the root of the blade includes additional ribs (42,44) angularly disposed relative to the entrance to said passageways (26a,28a,30a) and spaced therefrom, at least one of said ribs (40,42,44) being a portion of the wall defining at least one of said passageways (26a,28a,30a).

3. Internally cooled turbine blade adapted to be supported in a turbine disk (74) for a gas turbine engine, said blade having a root section for mounting the blade in a recess (70) formed in said disk (74) and a tip section, wall means between said root section and tip section defining an airfoil (10) of said blade, means including an inlet internally in said blade for routing cooling air through said inlet into said airfoil (10) and discharging through openings in said wall into the gas path of said gas turbine engine, characterized by means for preventing dirt from clogging said openings, said means including a sheet metal member (78) generally rectangularly shaped and having a portion stamped out so as to have a depending deflector portion (76) extending angularly therefrom, said sheet metal member (78) being secured to the root section of said blade so that said deflector portion (76) is angularly disposed relative to said inlet and in overlying relationship, whereby said deflector portion (76) deflects the dirt entrained air away from said inlet and toward a dirt entrained air discharge aperture (72) while permitting relatively dirt-free air to enter said inlet by turning around the angle formed by said deflector portion (76).

4. Internally cooled turbine blade according to claim 3, characterized by a plurality of internal passages in said turbine blade and a plurality of inlets associated with each internal passage, a complementary deflector portion (76) stamped out of said sheet metal plate (78) aligned to be angularly disposed relative to each of said plurality of inlets, and overlying said inlets to deflect said dirt entrained in said airstream away from said inlet.

5. Internally cooled blade for a gas turbine engine, said blade having a root section (18), a tip section (16) and wall means between said tip portion and root section (18) defining an airfoil (10), a plurality of spanwise disposed ribs (20,22,24) internally of said blade defining serpentine passages for conducting cool air through the blade and discharging through openings in said wall means, characterized by dirt removal means including at least one straight through passage (56,58) internally of said blade for conducting cooling air from the root section (18) to the tip section and discharging through an opening (60) formed in said tip section (16), the opening (60) being sized to discharge the largest dirt particle anticipated to be entrained in said cooling air, a sheet metal member (52) having deflectors (50) stamped therein to extend angularly relative to the opening remained in the sheet metal member (52), means for attaching said sheet metal member (52) to the root section (18) of said blade and orienting said deflectors (50) to overlie the inlet of said serpentine passages, and direct the dirt entrained air into said straight through passage (56,58).

6. Internally cooled blade according to claim 1 or 5, characterized in that said blade is a turbine blade.

## Patentansprüche

1. Innengekühlte Laufschaufel für ein Gasturbinentriebwerk, wobei die Laufschaufel einen Fußabschnitt und einen Spitzenabschnitt hat, eine Wandeinrichtung zwischen dem Fußabschnitt und dem Spitzenabschnitt, welche das Schaufelblatt der Laufschaufel bildet, und mehrere Rippen, die Durchlässe (26a, 28a, 30a) bilden, welche sich in Richtung der Spannweite in der Laufschaufel erstrecken, um Kühlluft durch die Laufschaufel hindurchzuleiten und in den Gasweg des Turbinentriebwerks über Öffnungen abzugeben, die in dem Schaufelblatt gebildet sind, gekennzeichnet durch eine Einrichtung, die Schmutz daran hindert, die Öffnungen zu verstopfen, wobei die Einrichtung wenigstens einen geraden Durchlaß (36) und ein in dem Spitzenabschnitt gebildetes Loch (48) aufweist, das für das größte Schmutzpartikel bemessen ist, welches erwartungsgemäß in der Kühlluft mitgeführt wird, und wenigstens eine Rippe (40) in dem Fußabschnitt, die einen leitwandartig geformten Teil hat, der relativ zu den Durchlässen (26a, 28a, 30a) abgewinkelt angeordnet ist, um die schmutzhaltige Luft in den geraden Durchlaß (36) zu leiten und zu verhindern, daß die schmutzhaltige Luft in die anderen Durchlässe (26a, 28a, 30a) gelangt.

2. Innengekühlte Laufschaufel nach Anspruch 1, dadurch gekennzeichnet, daß der Fuß der Laufschaufel zusätzliche Rippen (42, 44) aufweist, die relativ zu dem Eingang der Durchlässe (26a, 28a, 30a) abgewinkelt angeordnet und von diesen beabstandet sind, wobei wenigstens eine der Rippen (40, 42, 44) ein Teil der Wand ist, die wenigstens einen der Durchlässe (26a, 28a, 30a) begrenzt.

3. Innengekühlte Turbinenlaufschaufel, die zur Befestigung in einer Turbinenscheibe (74) vorgesehen ist, für ein Gasturbinentriebwerk, wobei die Laufschaufel einen Fußabschnitt zum Befestigen der Laufschaufel in einer in der Scheibe (74) gebildeten Ausnehmung (70) und einen Spitzenabschnitt hat, eine Wandeinrichtung zwischen dem Fußabschnitt und dem Spitzenabschnitt, die ein Schaufelblatt (10) der Laufschaufel bildet, eine Einrichtung mit einem Einlaß innerhalb der Laufschaufel zum Leiten von Kühlluft durch den Einlaß in das Schaufelblatt (10) und zum Abgeben durch Öffnungen in der Wand in den Gasweg des Gasturbinentriebwerks, gekennzeichnet durch eine Einrichtung, die Schmutz daran hindert, die Öffnungen zu verstopfen, wobei die Einrichtung ein Blechteil (78) aufweist, das insgesamt rechteckförmig ist und einen Teil hat, der so ausgestanzt ist, daß es einen nach unten vorstehenden Ablenkteil (76) hat, welcher sich abgewinkelt von ihm aus erstreckt, wobei das Blechteil (78) an dem Fußabschnitt der Laufschaufel so befestigt ist, daß der Ablenkteil (76) relativ zu dem Einlaß abgewinkelt angeordnet ist und ihm überlagert ist, wodurch der Ablenkteil (76) die schmutzhaltige Luft von dem Einlaß weg- und zu einer Auslaßöffnung (72) für schmutzhaltige Luft lenkt, während er gleichzeitig relativ schmutzfreier Luft gestattet, durch Herumgehen um den durch den Ablenkteil (76) gebildeten Winkel in den Einlaß zu gelangen.

4. Innengekühlte Turbinenlaufschaufel nach Anspruch 3, gekennzeichnet durch mehrere innere Durchlässe in der Turbinenlaufschaufel und mehrere Einlässe, die jedem inneren Durchlaß zugeordnet sind, einen komplementären Ablenkteil (76), der aus der Blechplatte (78) ausgestanzt und so ausgerichtet ist, daß er relativ zu jedem der mehreren Einlässe abgewinkelt angeordnet ist und den Einlässen überlagert ist, um den in dem Luftstrom mitgeführten Schmutz von dem Einlaß wegzulenken.

5. Innengekühlte Laufschaufel für ein Gasturbinentriebwerk, wobei die Laufschaufel einen Fußabschnitt (18), einen Spitzenabschnitt (16) und eine Wandeinrichtung zwischen dem Spitzenteil und dem Fußabschnitt (18) hat, die ein Schaufelblatt (10) bildet, mehrere in Richtung der Spannweite angeordnete Rippen (20, 22, 24) innerhalb der Laufschaufel, die gewundene Durchlässe zum Hindurchleiten von Kühlluft durch die Laufschaufel und zum Abgeben derselben über Öffnungen in der Wandeinrichtung bilden, gekennzeichnet durch eine Schmutzentfernungseinrichtung, die wenigstens einen geraden Durchlaß (56, 58) innerhalb der Laufschaufel zum Leiten von Kühlluft von dem Fußabschnitt (18) zu dem Spitzenabschnitt und zum Abgeben über eine in dem Spitzenabschnitt (16) gebildete Öffnung (60) aufweist, wobei die Öffnung (60) so bemessen ist, daß das größte Schmutzpartikel hindurchtreten kann, das erwartungsgemäß in der Kühlluft mitgeführt wird, ein Blechteil (52), in welchem Ablenkteile (50) durch Stanzen gebildet sind, die sich relativ zu der in dem Blechteil (52) verbliebenen Öffnung abgewinkelt erstrecken, eine Einrichtung zum Befestigen des Blechteils (52) an dem Fußabschnitt (18) der Laufschaufel und zum Ausrichten der Ablenkteile (50), so daß sie über dem Einlaß der gewundenen Durchlässe liegen, und zum Lenken der schmutzhaltigen Luft in den geraden Durchlaß (56, 58).

6. Innengekühlte Laufschaufel nach Anspruch 1 oder 5, dadurch gekennzeichnet, daß die Laufschaufel eine Turbinenlaufschaufel ist.

## Revendications

1. Aube refroidie de manière interne pour un turbo-moteur, ladite aube ayant une section racine et une section d'extrémité, des moyens de paroi entre ladite section racine et ladite section d'extrémité définissant la voilure de ladite aube, une pluralité de travées définissant des passages (26a, 28a, 30a) s'étendant à l'intérieur de ladite aube dans le sens de l'envergure pour que l'air de refroidissement traverse ladite aube et se décharge dans la trajectoire des gaz du turbo-moteur par des orifices ménagés dans ladite voilure, ***caractérisée par*** des moyens pour empêcher les impuretés de colmater lesdits orifices, lesdits moyens comprenant au moins un passage direct (36) en ligne droite et l'orifice (48) ménagé dans ladite section d'extrémité proportionné à la plus grande particule d'impureté anticipée comme allant être entraînée dans ledit air de refroidissement, et au moins une travée (40) à la section racine ayant une portion en forme de chicane disposée angulairement par rapport auxdits passages (26a, 28a, 30a) destinée à diriger l'air chargé d'impuretés dans ledit passage direct (36) en ligne droite et à empêcher ledit air chargé d'impuretés d'entrer dans lesdits autres passages (26a, 28a, 30a).

2. Aube refroidie de manière interne selon la Revendication 1, ***caractérisée en*** ***ce que*** la racine de l'aube comporte des travées complémentaires (42, 44) disposées en angle par rapport à l'entrée desdits passages (26a, 28a, 30a) et à une certaine distance de ceux-ci, au moins une desdites travées (40, 42, 44) étant une portion de la paroi définissant au moins un desdits passages (26a, 28a, 30a).

3. Aube refroidie de manière interne apte à être supportée dans un disque (74) de turbine d'une turbine à gaz, ladite aube ayant une section racine destinée au montage de l'aube dans un évidement (70) formé dans ledit disque (74), et une section d'extrémité, des moyens de paroi entre ladite section racine et ladite section d'extrémité définissant une voilure (10) de ladite aube, des moyens comportant une entrée située à l'intérieur de ladite aube et destinés à acheminer l'air de refroidissement, via ladite entrée, dans ladite voilure (10) et à le décharger, par des orifices ménagés dans ladite paroi, dans la trajectoire des gaz du turbo-moteur, ***caractérisée par*** des moyens pour empêcher les impuretés de colmater lesdits orifices, lesdits moyens comprenant un élément (78) métallique en feuille de forme générale rectangulaire et dont une partie est découpée à la matrice de manière à avoir une partie dépendante formant déflecteur (76) qui s'étend angulairement, ledit élément (78) métallique en feuille étant fixé à la section racine de ladite aube de façon que ladite partie-déflecteur (76) soit disposée angulairement par rapport à ladite entrée et de manière sus-jacente, ce qui fait que ladite partie-déflecteur (76) dévie l'air chargé d'impuretés et l'envoie vers un orifice (72) de décharge de l'air chargé d'impuretés tout en permettant à l'air relativement pur de pénétrer dans ladite entrée en contournant l'angle formé par ladite partie-déflecteur (76).

4. Aube refroidie de manière interne selon la Revendication 3, ***caractérisée par*** une pluralité de passage internes dans ladite aube de turbine et une pluralité d'entrées associées à chaque passage interne, une partie-déflecteur (76) additionnelle découpée à la matrice dans ladite plaque (78) métallique en feuille alignée pour être disposée angulairement par rapport à chacun desdits passages internes, et de manière sus-jacente auxdites entrées pour détourner de ladite entrée lesdites impuretés entraînées par le flux d'air.

5. Aube refroidie de manière interne pour un turbo-moteur, ladite aube ayant une section racine (18), une section d'extrémité (16) et des moyens de paroi entre ladite section d'extrémité et ladite section racine (18) définissant une voilure (10), une pluralité de travées (20, 22, 24) disposées dans le sens de l'envergure à l'intérieur de ladite aube et définissant des passages en serpentin pour conduire l'air froid dans l'aube et les décharger par des orifices ménagés dans lesdits moyens de paroi, ***caractérisée par*** des moyens dévacuation des impuretés comprenant au moins un passage direct (56, 58) en ligne droite à l'intérieur de ladite aube pour amener l'air de refroidissement de la section racine (18) à la section d'extrémité et à le décharger par un orifice (60) ménagé dans ladite section d'extrémité (16), l'ouverture (60) étant proportionnée à la plus grande particule d'impureté anticipée comme allant être entraînée dans ledit air de refroidissement, un élément (52) métallique en feuille dans lequel sont découpés par matrice des déflecteurs (50) qui s'étendent angulairement par rapport à l'ouverture laissée dans l'élément (52) métallique en feuille, des moyens pour fixer ledit élément (52) métallique en feuille à ladite section racine (18) de ladite aube et orienter lesdits déflecteurs (50) pour qu'ils soient sus-jacents à l'entrée desdits passages en serpentin et dirigent l'air chargé d'impuretés vers ledit passage direct (56, 58) en ligne droite.

6. Aube refroidie de manière interne selon la Revendication 1 ou 5, ***caractérisée en ce que*** ladite aube est une aube de turbine.
